# EUROPEAN PATENT APPLICATION

(11) **EP 0 711 817 A2**
(43) Date of publication of application: **15.05.1996**
(21) Application number: 95307445.7
(22) Date of filing: 19.10.1995
(51) Int. Cl.: C09D 183/04, C09D 183/05

(54) **Water-repellent thin films and methods for the preparation thereof**

(30) Priority: 31.10.1994 JP 290586/94
(71) Applicant: Dow Corning Toray Silicone Company Ltd., Tokyo 103 (JP)
(72) Inventor: Kobayashi, Hideki, c/o Res. and Dev. Ctr. Dow, Ichihara-shi, Chiba Pref. (JP); Nishiumi, Wataru, c/o Res. and Dev. Ctr. Dow, Ichihara-shi, Chiba Pref. (JP)
(74) Representative: Kyle, Diana

(57) **Abstract**

There is disclosed a hard, water-repellent thin film which is obtained by plasma polymerizing an SiH-containing organosiloxane on a substrate, wherein the organosiloxane is selected from
(A) a cyclic organosiloxane of the general formula 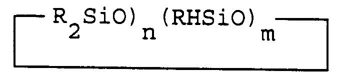 wherein R denotes a monovalent hydrocarbon radical having 1 to 18 carbon atoms, n is an integer having a value of zero or greater and m is an integer having a value of 3 to 20;
(B) a linear organosiloxane of the general formula

   R₂R'SiO(R₂SiO)ₙ(RHSiO)ₚSiR₂R'

   wherein R and n are as defined above, R' is selected from a monovalent hydrocarbon radical having 1 to 18 carbon atoms or a silicon-bonded hydrogen atom and p is an integer having a value of 1 to 20, with the proviso that organosiloxane (B) contains at least 3 silicon-bonded hydrogen atoms; or
(C) a compound of the general formula

   R₄₋ₓSi(OSiR₂H)ₓ

   wherein R is as defined above and x is 3 or 4.

## Description

The present invention relates to water-repellent thin films obtained by the plasma polymerization of SiH-containing organosiloxane and to a method for preparing same.

Dimethylpolysiloxanes exhibit low surface tensions of 20 to 22 mN/m and, as a consequence, are used as treatment agents for making various types of substrates water repellent. However, these water-repellent coatings are generally soft, which can prevent their use depending on the particular application. It is also known that highly water-repellent substrates are obtained by dissolving SiH-containing methylhydrogenpolysiloxane in organic solvent, coating this solution on any of a variety of substrates, and drying by heating. Unfortunately, the formation of a uniform coating with this latter method is quite problematic. In addition, JP-A 63-67566 proposes a method for preparing spherical, polysiloxane-coated silica-gel powder that is highly suited for use as a gas chromatographic packing. In this method, a mixture of methylhydrogenpolysiloxane and spherical, silica-gel powder is exposed to a plasma. Again, however, it is quite difficult to obtain a uniform, homogeneous water-repellent thin film using this method.

The present invention takes as an object the introduction of water-repellent thin films that are both very hard and highly water repellent as evidenced by a large contact angle versus water. An additional object of this invention is the introduction of a method for preparing the described films.

The present invention, therefore, is a water-repellent thin film obtained by the plasma polymerization on the surface of a substrate of an SiH-containing organosiloxane selected from the group consisting of:
(A) a cyclic organosiloxane with the general formula 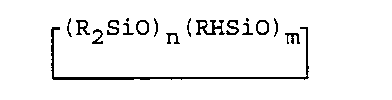 wherein R denotes a C₁ to C₁₈ monovalent hydrocarbon radical, n is an integer with a value of zero or greater, and m is an integer with a value from 3 to 20;
(B) a linear organosiloxane with the general formula

   R₂R'SiO(R₂SiO)ₙ(RHSiO)ₚ SiR₂R'

   wherein R denotes a C₁ to C₁₈ monovalent hydrocarbon radical, R' is a C₁ to C₁₈ monovalent hydrocarbon radical or a silicon-bonded hydrogen atom, n is an integer with a value of zero or greater, and p is an integer with a value from 1 to 20, with the proviso that this organosiloxane contains at least 3 silicon-bonded hydrogen atoms, and
(C) an organosiloxane with the general formula

   R₄₋ₓSi (OSiR₂H) ₓ

   wherein R denotes a C₁ to C₁₈ monovalent hydrocarbon radical and x is 3 or 4.

The present invention further relates to a method for the preparation of water-repellent thin films characterized in that an SiH-containing organosiloxane, as described above, is introduced into a plasma polymerization device and said SiH-containing organopolysiloxane is plasma polymerized in the presence of an oxygen-containing compound selected from the group consisting of water, air, and C₁ to C₁₀ alcohols and thereby deposited on the surface of an inorganic or organic substrate.

The water-repellent thin films of the present invention will be considered in detail. These water-repellent thin films are formed by the SiH-containing organosiloxane used by the present invention, which must contain at least 3 silicon-bonded hydrogen atoms in each molecule. This component is selected from the three types of organosiloxanes described above.

The first of these is (A) a cyclic organosiloxane with the following general formula: 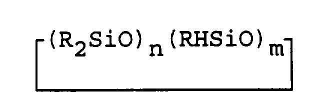 wherein R denotes a C₁ to C₁₈ monovalent hydrocarbon radical and is exemplified by alkyl radicals such as methyl, ethyl, propyl, butvl, and pentyl; aryl radicals such as phenyl, tolyl, and xylyl; aralkyl radicals such as benzyl, and phenethyl; and alkenyl radicals such as vinyl, or allyl. Methyl and phenyl are preferred for R. The subscript n is an integer with a value of zero or greater, and the subscript m is an integer from 3 to 20. The vapor pressure is too low at m greater than 20, which makes introduction into the plasma polymerization device problematic. The cyclic organosiloxane under discussion is exemplified by cyclic organosiloxanes with the following formulas, in which Me hereinafter denotes methyl: 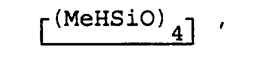 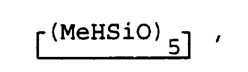 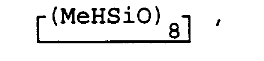 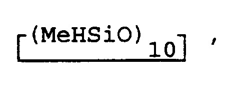 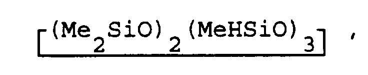 and

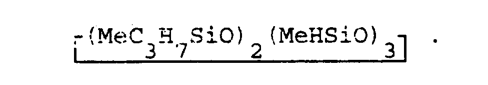

The second organosiloxane used in our invention is (B) a linear organosiloxane with the following general formula

R₂R'SiO(R₂SiO)ₙ(RHSiO)ₚSiR₂R'

wherein R denotes a C₁ to C₁₈ monovalent hydrocarbon radical and R' is a silicon-bonded hydrogen atom or a C₁ to C₁₈ monovalent hydrocarbon radical. R and R' are exemplified by the same radicals as given above for R of organosiloxane (A) where R' is a hydrocarbon group. The subscript n is an integer with a value of zero or greater, and p is an integer having a value of 1 to 20. The vapor pressure is too low at p greater than 20, which makes introduction into the plasma polymerization device problematic.
Subject linear organosiloxane is exemplified by linear organosiloxanes with the following formulas:

Me₃SiO(MeHSiO)₃SiMe₃,

Me₃SiO(MeHSiO)₅SiMe₃,

HMe₂SiOMeHSiOSiMe₂H ,

HMe₂SiO (MeHSiO) ₃SiMe₂H ,

HMe₂SiO(MeHSiO)₅SiMe₂H , and

HMe₂SiO(C₃H₇SiHO)₅SiMe₂H .

The third organosiloxane used by this invention is (C) an organosiloxane with the following general formula:

R₄₋ₓSi (OSiR₂H) ₓ

wherein R denotes a C₁ to C₁₈ monovalent hydrocarbon radical and is exemplified by the same radicals as given above for component (A). The subscript x is 3 or 4. This organosiloxane used in the present invention is exemplified by organosiloxanes with the following formulas.

MeSi(OSiMe₂H)₃ ,

Si(OSiMe₂H)₄ , and

C₃H₇Si (OSiMe₂H) ₃ .

The organosiloxanes used in the present invention are liquids at room temperature that exhibit high volatilities, and as such are easily managed, for example, for introduction in vapor form into the plasma polymerization device.

Any substrate that permits deposition of plasma-polymerized films from the SiH-containing organosiloxane described above can be used as the substrate for deposition of the water-repellent thin films of this invention, but otherwise its qualities are not crucial. The substrate is exemplified by inorganic substrates such as glasses, silica glasses, quartz, silicon wafers, ceramics, and metals of various types, and by organic substrates such as polycarbonate, polyethylene, polypropylene, and polymethyl methacrylate. The substrate may have various shapes, for example, flat sheet, a curved sheet-like surface, block-like, and so forth. Thus, the shape of the substrate is not specifically restricted with the exception that powders are excluded.

The water-repellent thin films of our invention are obtained by plasma polymerization of the SiH-containing organosiloxane described above. These films are very hard and generally have a pencil hardness of at least HB. Their water repellency corresponds to a contact angle versus water of at least 90°.

The water-repellent thin films of this invention are prepared by a method wherein an SiH-containing organosiloxane selected from the group consisting of:
(A) a cyclic organosiloxane with the general formula

   (R₂SiO)ₙ(RHSiO)ₘ

   wherein R denotes a C₁ to C₁₈ monovalent hydrocarbon radical, n is an integer with a value of zero or greater, and m is an integer with a value from 3 to 20,
(B) a linear organosiloxane with the general formula

   R₂R'SiO(R₂SiO)ₙ(RHSiO) ₚSiR₂R'

   wherein R denotes a C₁ to C₁₈ monovalent hydrocarbon radical, R' is a C₁ to C₁₈ monovalent hydrocarbon radical or a silicon-bonded hydrogen atom, n is an integer with a value of zero or greater, and p is an integer with a value from 1 to 20, with the proviso that this organopolysiloxane contains at least 3 silicon-bonded hydrogen atoms,
   and
(C) an organosiloxane with the general formula

   R₄₋ₓSi(OSiR₂H)ₓ

   wherein R denotes a C₁ to C₁₈ monovalent hydrocarbon radical and x is 3 or 4 is introduced into a plasma polymerization device. The SiH-containing organosiloxane is then plasma polymerized in the presence of an oxygen-containing compound selected from the group consisting of water, air, and C₁ to C₁₀ alcohols and thereby deposited on the surface of an inorganic or organic substrate, which is also present in the polymerization device.

The organosiloxane used our method is the same as the organosiloxane described above in the explanation of the water-repellent thin films. In the present invention, the described organosiloxane is introduced into a plasma polymerization device and plasma polymerized, in the presence of an oxygen-containing compound selected from the group consisting of water, air, and alcohols having 1 to 10 carbon atoms, and are thereby deposited on the surface of an inorganic or organic substrate. The organosiloxane is preferably introduced as a vapor, and this vapor is generated by heating the organosiloxane at room temperature up to, as a general rule, 200°C. The thus-generated vapor is preferably diluted with an inert carrier gas, (e.g., nitrogen, argon, helium, and so forth) or a gas such as oxygen or air and then transported to the plasma polymerization device. The C₁ to C₁₀ alcohol is exemplified by methanol, ethanol, propanol, and butanol.

In the instant method, the substrate is first placed in the plasma polymerization device and the interior of the plasma polymerization device is then evacuated. The evaporated SiH-containing organosiloxane is subsequently introduced and a plasma polymerization is induced by a glow discharge generated by electrodes installed in the plasma polymerization device. This plasma polymerization is preferably run under mild conditions to preserve the backbone structure of the SiH-containing organosiloxane to the greatest extent possible. For example, the plasma discharge is preferably run at a vacuum no greater than 1.3 kPa (10 Torr) and preferably no greater than 0.7 kPa (5 Torr) at a frequency in the range from 1 to 100 MHz and an output in the range from 1 to 100 W (Watt). The temperature is preferably held in the range from room temperature to 200°C.

The SiH-containing organosiloxane will plasma polymerize under these conditions and becomes deposites on the substrate surface. Its deposited thickness varies in almost direct proportion to increases in the plasma polymerization time and increases in the feed of vaporized organosiloxane, and these parameters are therefore used to adjust the deposited thickness.

The thickness of the water-repellent film thereby produced will vary according to its application, but these films are generally prepared in thicknesses ranging from 0.001 to 5 micrometers.

### Examples

The present invention is explained in greater detail below through illustrative examples. The deposited thickness reported for the plasma-polymerized films in the examples is the value calculated from the deposition rate as determined by measurement of the film thickness using a needle contact-type film thickness meter (alpha-STEP200™ from Tokyo Electron Kabushiki Kaisha, Japan) for plasma polymerization on a glass slide under the same conditions of pressure and applied power.

### Example 1

A grounded stainless steel base (diameter = 100 mm) was placed in a glass bell jar (diameter = 22 cm), and maintained at a temperature of 100°C. A power-application electrode (diameter = 80 mm) was fixed at a position 20 mm above this base. A glass slide (length = 76 mm; width = 26 mm; and thickness = 1 mm) was subsequently placed on the base and the interior of the jar was placed under a vacuum. Then, a flow of tetramethylcyclotetrasiloxane (MeHSiO)₄ was set up using dry air as a carrier gas to give an internal pressure of 0.2 kPa (mbar), and a plasma polymerization was run for 20 minutes at a frequency of 13.56 MHz and an applied power of 10 W.

After completion of the plasma polymerization, the internal pressure was released to ambient pressure and the glass slide was removed. A transparent and uniform thin film had formed on the glass slide. A contact angle versus pure water of 103° was measured on the surface of the glass slide carrying the thin film. This thin film had a pencil hardness of 3H, as measured by the method of JIS K 5400, "The Pencil Scratch Test for Coatings." The plasma-polymerized film had a deposited thickness of 100 nm.

### Example 2

A grounded stainless steel base (diameter = 100 mm) was placed in a glass bell jar (diameter = 22 cm) and maintained at a temperature of 60 °C. A power-application electrode (diameter = 80 mm) was fixed at a position 20 mm above this base. A glass slide was subsequently placed on the base and the interior of the jar was placed under a vacuum. Then, a flow of the linear organosiloxane Me₂HSiO(MeHSiO)₂SiMe₂H was set up using dry air as a carrier gas to give an internal pressure of 0.3 kPa (mbar), and a plasma polymerization was run as in Example 1 for 20 minutes at an applied power of 25 W.

After completion of the plasma polymerization, the internal pressure was released to ambient pressure and the glass slide was removed. A transparent and uniform thin film had formed on the glass slide. A contact angle versus pure water of 100° was measured on the surface of the glass slide carrying the thin film. This thin film had a pencil hardness of 4H, as measured by the method of JIS K 5400. The plasma-polymerized film had a deposited thickness of 200 nm.

### Example 3

A grounded stainless steel base (diameter = 100 mm) was placed in a glass bell jar (diameter = 22 cm), and maintained at a temperature of 60 °C. A power-application electrode (diameter = 80 mm) was fixed at a position 20 mm above this base. A silicon wafer (2 cm) was subsequently placed on the base and the interior of the jar was placed under a vacuum. Then, a flow of the organosiloxane MeSi(OSiMe₂H)₃ was set up using dry air as a carrier gas to give an internal pressure of 0.2 kPa (mbar), and a plasma polymerization was run as in Example 1 for 15 minutes at an applied power of 10 W.

After completion of the plasma polymerization, the internal pressure was released to ambient pressure and the silicon wafer was removed. A transparent and uniform thin film had formed on the silicon wafer. A contact angle versus pure water of 98° was measured on the surface of the silicon wafer carrying the thin film. The plasma-polymerized film had a deposited thickness of 150 nm.

### Comparative Example 1

A plasma polymerization was run as in Example 2, but in this case using the linear organosiloxane Me₃Si(MeHSiO)₂SiMe₃ in place of the linear organosiloxane Me₂HSiO(MeHSiO)₂SiMe₂H that was used in Example 2.

The resulting thin film was soft, having a pencil hardness no greater than B, and could not be used as a water-repellent thin film.

## Claims

1. A water-repellent thin film, obtained by plasma polymerizing an SiH-containing organosiloxane on a substrate, said organosiloxane being selected from the group consisting of
(A) a cyclic organosiloxane of the general formula 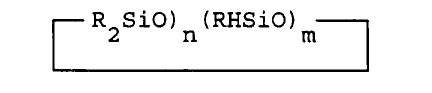 wherein R denotes a monovalent hydrocarbon radical having 1 to 18 carbon atoms, n is an integer having a value of zero or greater and m is an integer having a value of 3 to 20;
(B) a linear organosiloxane of the general formula
R₂R' SiO (R₂SiO)ₙ(RHSiO)ₚSiR₂R'
wherein R and n are as defined above, R' is selected from a monovalent hydrocarbon radical having 1 to 18 carbon atoms or a silicon-bonded hydrogen atom and p is an integer having a value of 1 to 20, with the proviso that organosiloxane (B) contains at least 3 silicon-bonded hydrogen atoms; and
(C) an organosiloxane compound with the general formula
R₄₋ₓSi (OSiR₂H)ₓ
wherein R is as defined above and x is 3 or 4.

2. The film according to claim 1, wherein said film has a pencil hardness of at least HB and a contact angle versus water of at least 90°.

3. The film according to claim 2, wherein said cyclic organosiloxane (A) has a formula selected from the group consisting of 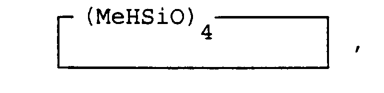 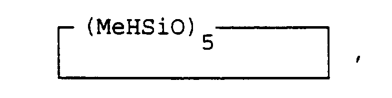 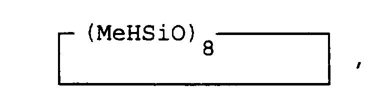 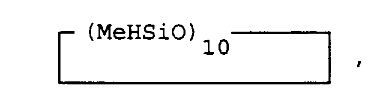 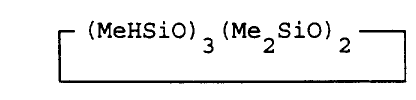 and 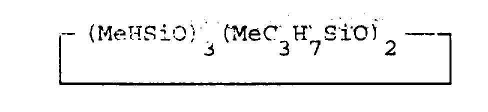 in which Me denotes methyl.

4. The film according to claim 2, wherein said linear organosiloxane (B) has a formula selected from the group consisting of
Me₃SiO (MeHSiO)₃SiMe₃ ,
Me₃SiO(MeHSiO)₅SiMe₃ ,
HMe₂ SiOMeHSiOSiMe₂H ,
HMe₂SiO(MeHSiO)₃SiMe₂H ,
HMe₂SiO (MeHSiO) ₅SiMe₂H and
HMe₂SiO (C₃H₇SiHO) ₅SiMe₂H
in which Me denotes methyl.

5. The film according to claim 2, wherein said organosiloxane compound (C) has a formula selected from the group consisting of
MeSi (OSiMe₂H)₃ ,
Si(OSiMe₂H)₄ and
C₃H₇Si(OSiMe₂H)₃
in which Me denotes methyl.

6. A method for preparing a water-repellent thin film, said method comprising plasma polymerizing the SiH-containing organosiloxane of claim 1 in a plasma polymerization device in the presence of a substrate and in the presence of an oxygen-containing compound selected from the group consisting of water, air and an alcohol having 1 to 10 carbon atoms.

7. A substrate bearing a film deposited by the method of any of claims 1 to 6 wherein said substrate is selected from the group consisting of glass, quartz, silicon, ceramic, metal, polycarbonate, polyethylene, polypropylene and polymethyl methacrylate.
